# EUROPEAN PATENT APPLICATION

(11) **EP 1 143 733 A2**
(43) Date of publication of application: **10.10.2001**
(21) Application number: 01460021.7
(22) Date of filing: 02.04.2001
(51) Int. Cl.: H04N 7/173

(54) **Signal interface for a bi-directional communication device**

(30) Priority: 06.04.2000 US 195227
(71) Applicant: Thomson Licensing S.A., 92100 Boulogne-Billancourt (FR)
(72) Inventor: Flickner, Andrew Kent, c/o Thomson Multimedia, 92100 Boulogne Cedex (FR); McReynolds, Kevin Paul, c/o Thomson multimedia, 92100 Boulogne Cedex (FR); Rhodes, Robert Andrews, c/o Thomson Multimedia, 92100 Boulogne Cedex (FR)
(74) Representative: Ruellan-Lemonnier, Brigitte

(57) **Abstract**

A signal interface supports bi-directional communication in a signal communication system (36). The signal interface is preferably utilized within a cable television/communication system set top box. The signal interface includes a diplexer (76) positioned between an input/output (78) of the set top box and a signal splitter (66). By positioning the diplexer (76) before the signal splitter (66), there is no attenuation of a return data channel (RDC) signal. Thus, a lower gain RDC amplifier may be used. Additionally, the signal splitter (66) is operable over a smaller frequency range since the signal splitter (66) need only operate over the frequency bandwidth of the video signal and not the combined frequency bandwidth of the video signal and the RDC.

## Description

The present invention relates to bi-directional communication equipment and, more particularly, to bi-directional communication equipment for cable systems providing television and data signals.

Cable television or CATV systems provide both television and data signals to consumers. The television and data signals may be analog or digital, or a combination of analog and digital signals depending on content. CATV systems also typically support two-way or bi-directional communication between a head end of the CATV system and individual consumers. Such bi-directional communication allows the CATV system to provide content ordered by the consumer through the CATV system, such as pay-per-view programming (signals), and an Internet connection via a cable modem to the consumers. In order to receive and utilize the various signals and/or services provided by the CATV system, it is necessary to have a communication device associated with the television of the consumer. The communication device is known as a set top box.

In view of the above, the set top box now typically includes an analog, digital, or analog and digital signal receiver (audio and video) as well as a cable modem. The analog/digital signal receiver is operable to receive digital and/or analog television signals while the cable modem allows a user to connect to a network such as the Internet. The set top box supports bi-directional communication between the CATV system head end and the set top box.

Because television and data signals may include many forms or formats, both encoding and modulation thereof, CATV signal standards have been developed to allow manufactures of set top boxes and CATV systems providers to produce and operate mutually compliant systems. By adopting and using public standards, competition may be opened up in the CATV system/set top box market as opposed to the use of proprietary systems.

One such developed public standard for digital video is known as OpenCable™. OpenCable™, produced by Cable Television Laboratories, Inc. (CableLabs®) is a set of interface specifications that define digital cable television set top boxes and other digital devices to be deployed by cable operators in North America. OpenCable™ provides flexibility in the design and use of set top boxes.

Another developed standard for cable modems is known as DOCSIS™ (Data Over Cable Service Interface Specification). DOCSIS™, produced by Cable Television Laboratories, Inc. (CableLabs®), defines interface requirements for cable modems involved in high speed data distribution over cable television system networks.

A digital CATV set top box as described above generally consists of a radio frequency (RF) front end, digital and analog demodulators, and digital signal processors. Due to the combination of cable modem and digital video receiver functionality in the same set top box, the RF signal processing is complex. As well, the set top box must meet the various interface requirements, such as the OpenCable™ and DOCSIS™ physical layer specifications. Typically, in bi-directional communication or CATV systems, communication takes place over three channels. The first channel is an analog or digital channel that exists in a frequency band between 54 MHz and 860 MHz. The second channel is a Forward Data Channel (FDC) that exists in a frequency band between 70 MHz and 130 MHz. With these channels, signals/data flows from a head end of the CATV system to the equipment of the consumer. A third channel is a Return Data Channel (RDC) that exists in a frequency between 5 MHz and 42 MHz. This channel carries data that is transmitted from the set top box to the head end equipment of the CATV system.

In providing the various functionality required of current digital set top boxes and meeting the various interface specifications, the set top box requires specific hardware and several inputs and outputs. However, current set top boxes are not efficient in their design to meet the objectives.

The present invention is a signal interface supporting bi-directional communication in a signal communication system. The signal interface is preferably within a cable television/communication system set top box.

The signal interface includes a diplexer positioned between an input/output of the set top box and a signal splitter. By positioning the diplexer before the signal splitter, there is no attenuation of a return data channel (RDC) signal. Thus, a lower gain RDC amplifier may be used. Additionally, the signal splitter is operable over a smaller frequency range since the signal splitter need only operate over the frequency bandwidth of the video signal and not the combined frequency bandwidth of the video signal and the RDC.

In one form, the present invention is an apparatus for a system for decoding video signals received from a first source and supporting continuous bi-directional communication with the first source. The apparatus provides a signal interface for conditioning signals communicated between the system and the first source. The apparatus includes a terminal operable to receive a communication signal from the source and for outputting a return communication signal to the first source. A diplexer is coupled to the terminal and operable to separate a received communication signal from a return communication signal based on different frequency bands of the received communication signal and the return communication signal. A signal splitting device is coupled to the diplexer and operable to split the separated received communication signal to provide first and second signals that substantially replicate the separated received communication signal. First and second tuners are coupled to receive the first and second replicated signals from the splitting device and operable to tune to receive data being conveyed by the first and second replicated signals respectively.

In another form, the present invention is an apparatus for a system for decoding video signals received from first and second sources and supporting continuous bi-directional communication with the first source. The apparatus provides a signal interface for conditioning signals received from the second source and communicated between the system and the first source. The apparatus includes first and second terminals operable to receive signals from the first and second sources respectively. A signal splitting device is operable to split a signal derived from a signal received by the first terminal to provide first and second signals that substantially replicate the signal derived from the signal received by said first terminal. First and second tuners are coupled to receive the first and second replicated signals from the splitting device and operable to tune to receive data being conveyed in the first and second replicated signals respectively. A switch is coupled to the splitting device and the second tuner. The switch, in a first position provides coupling of the second replicated signal to the second tuner, and in a second position provides isolation of the second replicated signal from the second tuner and provides coupling of the video signal received from the second source to the second tuner.

In yet another form, the present invention is a set top box. The set top box includes a first terminal operable to receive a first signal from a first source and output a return signal to the first source. A diplexer is coupled to the first terminal and operable to separate a received first signal from an outgoing return signal based on a difference of frequency bands of the first signal and the outgoing return signal. A signal splitter is coupled to the diplexer and operable to separate the received first signal into first and second separated signals each of which substantially replicates the received first signal. A first tuner is coupled to receive the first split signal and operable to tune to data conveyed in the first split signal. A second tuner is coupled to receive the second split signal and operable to tune to data conveyed in the second split signal.

### Brief Description of the Drawings

Reference to the following description of the present invention should be taken in conjunction with the accompanying drawings, wherein:
Fig. 1 is a block diagram representation of a typical CATV system in which the present invention may be utilized;
Fig. 2 is a block diagram of a head end system of the CATV system of Fig. 1 in communication with equipment of a subscriber;
Fig. 3 is a block diagram of a prior art approach to combining DOCSIS and OpenCable™ functionality in a bi-directional communication device coupled to a single communication band or coaxial medium of a communication system;
Fig. 4 is a block diagram of an embodiment of an approach to combining DOCSIS and OpenCable™ functionality in a bi-directional communication device coupled to a single communication band or coaxial medium of a communication system in accordance with the principles of the present invention;
Fig. 5 is a block diagram of a prior art approach to combining DOCSIS and OpenCable™ functionality in a bi-directional communication device coupled to two communication bands or coaxial mediums of a communication system;
Fig. 6 is a block diagram of an embodiment of an approach to combining DOCSIS and OpenCable™ functionality in a bi-directional communication device coupled to two communication bands or coaxial mediums of a communication system in accordance with the principles of the present invention; and
Fig. 7 is a block diagram of an RF front end of an embodiment of a communication device of Fig. 2 and, more particularly a set top box, coupled to two communication bands or coaxial mediums of a communication system.

Corresponding reference characters indicate corresponding parts throughout the several views.

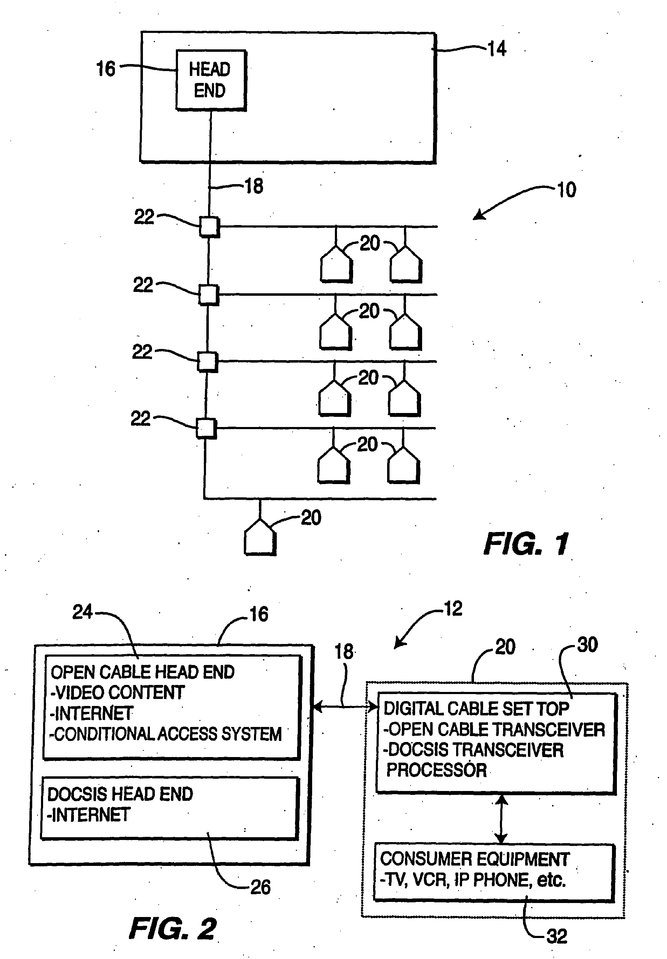

With reference to Fig. 1, there is depicted a block diagram representation of a cable television (CATV) system, generally designated 10. The CATV system 10 is a bi-directional television signal and data communication system. It should initially be understood that the CATV system 10 is only exemplary of a bi-directional communication system environment/application in which the present invention may be utilized.

The CATV system 10 includes a cable head end facility 14 at which a head end 16 of the CATV system 10 is located. A coaxial cable network 18 of coaxial cable or medium typically extends from the head end 16 throughout the area served by the CATV system 10. Subscribers 20 are connected to the coaxial cable network 18 at multiple points along its run. Interspersed throughout the run of the coaxial cable network 18 are various CATV elements/devices as are known in the art, such as amplifiers 22, that are part of the CATV system 10. Of course, various connectors or couplers as are known in the art are used throughout the CATV system 10, but not explicitly shown.

The CATV system 10 may include fiber optic cable, coax, or hybrid fiber-coax, in addition to or in place of the coaxial cable network 18. Typically, the fiber optic cable would extend from the head end 16 to a distribution point or fiber node (not shown). Coaxial cable then connects the subscribers 20 to the distribution point or fiber node. The CATV system 10 is thus operable to provide single direction communication (transmission) and/or two-way or bi-directional communication (transmission and reception) of television and/or data signals (a band or bandwidth of signals/channels/information) between the subscribers 20 and the head end 16. It should be appreciated that the CATV system 10 may utilize communication/signal paths between the head end 16 and the subscribers 20 other than those shown and/or described herein.

As is conventional, the head end 16 receives a plurality of television signals, such as from satellite receivers (not shown) for satellite transmissions and various antennas (not shown) for terrestrial transmissions, all of which are typically located at the head end facility 14. The head end facility 14 converts the plurality of television signals from the various sources to appropriate frequencies for transmission over the coaxial cable network 18 to the subscribers 20. As an example, the cable system 10 might be designed to handle forty programming channels, each of which has a unique frequency or frequency range within a particular frequency band carrying audio and video information. Frequencies are adjacent to each other and spaced from each other by a set amount, i.e. typically 6 MHz.

The television signals transmitted by the head end 16 generally consist of either analog, digital, or a combination of analog and digital audio and video signals. In the case of analog television signals, the analog audio and video signals are typically in the NTSC format, but may be in any format such as are known in the art. In the case of digital television signals, the digital audio and video bitstreams are made to modulate a carrier signal (carrier) that is upconverted for transmission over the coaxial cable network 18. This is accomplished by applying a modulation scheme representing the audio and video bitstreams onto a radio frequency (RF) carrier. The audio and video television bitstreams are assembled or encoded utilizing a digital codec (coder/decoder) protocol such as MPEG or the like. Modulation schemes may be those as are known and/or used in the art, for example, quadrature amplitude modulation (QAM), quadrature/quaternary phase shift keying (QPSK), or vestigal sideband (VSB). Other types of digital modulation schemes may also be used as well as variations of the above-mentioned digital modulation schemes (e.g. 16-QAM, 32-QAM, 64-QAM, 256-QAM, 4-VSB, and 8-VSB). As well, different digital modulation schemes may be used for different channels of the CATV system 10 depending on the type of data being transmitted.

Additionally, the head end 16 is operable to provide and/or support bi-directional data communications with the subscribers 20 via what is known as a cable modem, particularly for accessing the Internet.

Referring now to Fig. 2, a system, generally designated 12, in accordance with the principles presented herein, is shown. The system 12 includes the head end 16 and a subscriber or service recipient 20. The head end 16 includes an OpenCable™ head end 24. The OpenCable™ head end 24 follows Advanced Platforms and Services group at Cable Television Labs, Inc. (CableLabs®) set of interface specifications for digital cable television set-top boxes and other digital devices (i.e. OpenCable™). The OpenCable™ head end 24 allows for the transmission of video content, and provides Internet capabilities and a conditional access system for the subscribers 20 via the coaxial cable network 18. The head end 16 further includes a DOCSIS (Data Over Cable Service Interface Specification) head end 26. The DOCSIS (now known as CableLabs® Certified™ Cable Modems project) head end 26 follows the CableLabs® interface requirements for cable modems involved in high-speed data distribution over cable television system networks. The DOCSIS head end 26 allows for Internet capabilities for the subscribers 20 via the coaxial cable network 18.

The subscriber 20 has a set top box 30 that is in communication with the coaxial cable network 18. The set top box 30 includes appropriate circuitry/logic to provide an OpenCable™ transceiver and a DOCSIS transceiver. Other circuitry/logic is provided to support other functions as discussed below. The set top box 30 is in communication with various consumer equipment 32, such as a television/television apparatus, a VCR, DVD, IP phone, and the like. The set top box 30 is operable for bi-directional communication with the head end 16 (i.e. the OpenCable™ head end 24 and the DOCSIS head end 26), preferably over three channels, lines, or conduits of communication (channels) or frequency bands.

The first channel is an analog (e.g. NTSC) or digital (e.g. Forward Application Transport or FAT) video channel (collectively "video channel") that exists in the frequency band between 54 MHz and 860 MHz. The video channel may also include audio and auxiliary/extended information data. Further, it should be appreciated that the term "video channel" encompasses or includes a plurality of video signals that are dividable into channels as tunable by a receiver. A second channel is a Forward Data Channel (FDC) that occurs between 70 MHz and 130 MHz. With respect to the video channel and the FDC, data/signals are transmitted (flow) from head end 16 to the set top box 30. A third channel is a Return Data Channel (RDC) that exists between 5 MHz and 42 MHz. The FDC contains data/signals that are transmitted from the set top box 30 to the head end 16.

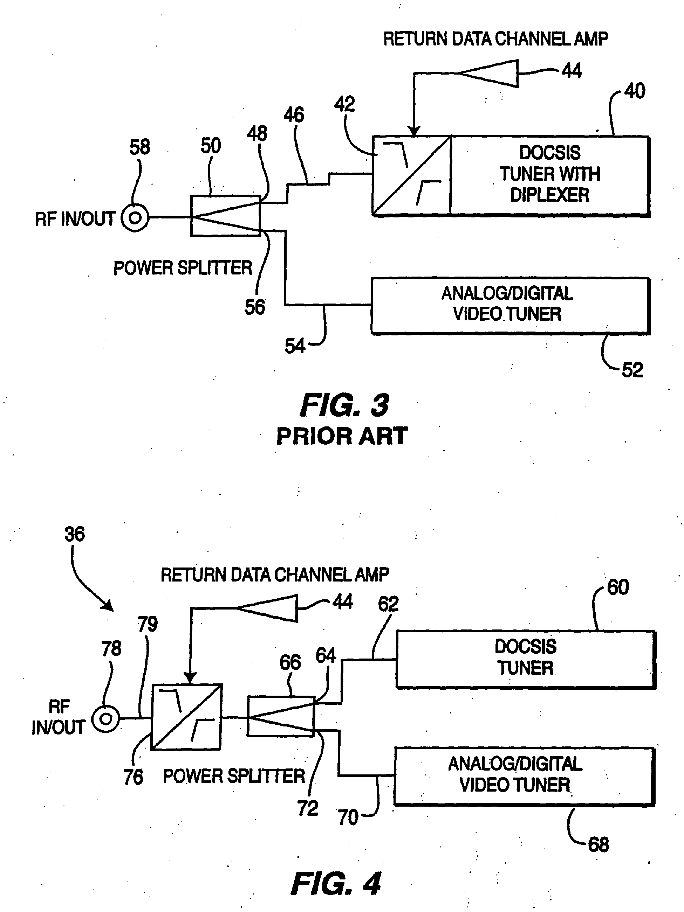

Referring to Fig. 3, a block diagram of a prior art or conventional approach to integrating DOCSIS and OpenCable™ functionality in a bi-directional signal/data communication device coupled to a single RF cable plant, medium or band (radio frequency) is shown. The single RF band is received from the coaxial cable network 18 via an RF connector/interface 58. It is assumed that the single RF band includes video signals and DOCSIS signals from the head end 16 (see Fig. 2), and is capable of propagating return data from the communication device via a return data channel.

A signal or power splitter 50 is coupled to the RF connector/interface 58 for splitting the incoming transmission/signals from the head end 16 into two paths. The splitter 50 has an output port 56 to which is coupled an analog/digital video tuner 52 via line or path 54. The analog/digital video tuner 52 is operable to receive and tune analog and/or digital video signals. Other processing of the tuned analog and/or digital video signal may be accomplished as well.

The splitter 50 further includes an input/output port 48 to which is coupled a DOCSIS tuner 40 via a line or path 46. The DOCSIS tuner 40 includes an integral diplexer 42. In general, a diplexer is a frequency selective signal splitter that directs signals in one frequency band to one output and signals of another frequency band to another output. The diplexer 42 is operable to direct DOCSIS signals from the splitter 50 to the DOCSIS tuner 40, and to direct return data channel signals from a return data channel amplifier 44 through the splitter 50.

In the prior art configuration of Fig. 3, the splitter 50 attenuates the RDC signals passing therethrough. Thus, the RDC amplifier 44 requires several dBs more output signal capability for the RDC signals in order to compensate for this change.

Referring to Fig. 4, a block diagram of a system, generally designated 36, of a form of the present invention for integrating DOCSIS and OpenCable™ functionality in a bi-directional signal/data communication device coupled to a single RF band is shown in accordance with the principles set forth herein. The single RF band is received from the coaxial cable network 18 via an RF connector/interface 78. It is assumed that the single RF band includes video signals and DOCSIS signals from the head end 16 (see Fig. 2), and is capable of propagating return data from the communication device via a return data channel.

In accordance with an aspect of the present invention, a diplexer 76 is coupled to the RF connector/interface 78 via lead or terminal 79. The diplexer 76 allows DOCSIS and analog/digital video signals to pass to a signal or power splitter 66, while accepting RDC signals from an RDC amplifier 74 to send back to the head end 16. A signal or power splitter 66 is coupled to the output of the diplexer 76. The splitter 66 has a first output port 64 to which is coupled a DOCSIS tuner 60 via a line or path 62. The DOCSIS tuner includes appropriate circuitry/logic in accordance with the DOCSIS specification to receive and tune DOCSIS signals. The splitter 66 further includes a second output 72 to which is coupled an analog/digital video tuner 68 via a line or path 70. The analog/digital video tuner 68 includes appropriate circuitry/logic to receive and tune analog and/or digital video signals as is known in the art.

In accordance with the principles of the present invention, because the diplexer 76 is before the splitter 66, the RDC signal is not attenuated by the splitter. Thus, the output power of the RDC amplifier 74 of the present invention is lower than the output power of the RDC amplifier 44 of the prior art. In addition, the splitter 66 does not have to operate over the bandwidth of the video and return signals (5-860 MHz or 7.4 octaves), but only over the video signal bandwidth (54-860 MHz, or 3.99 octaves).

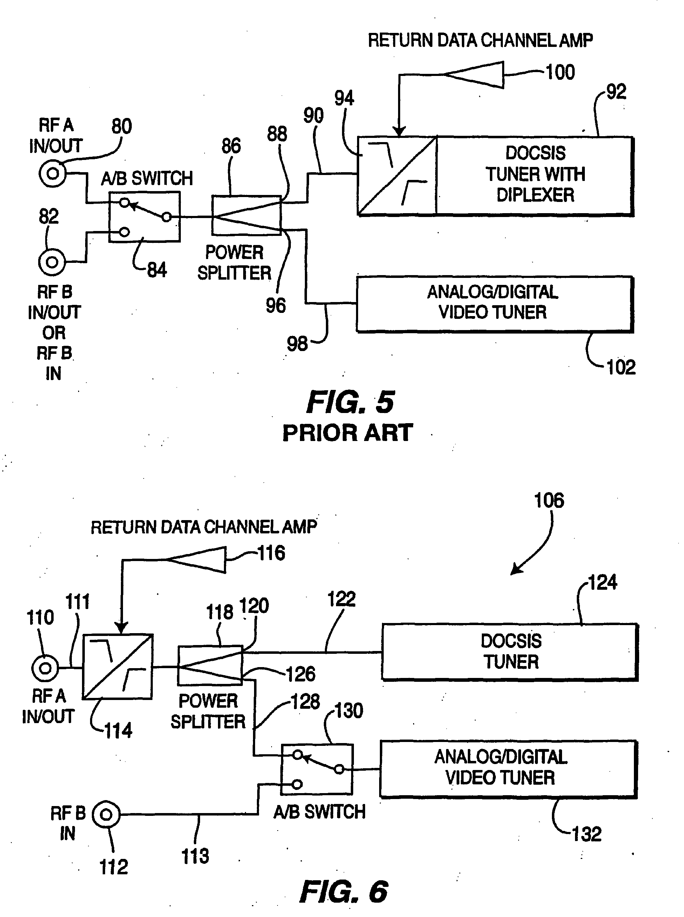

With reference to Fig. 5, a block diagram of a prior art or conventional approach to integrating DOCSIS and OpenCable™ functionality in a bi-directional signal/data communication device coupled to two RF (radio frequency) bands is shown. In some cases, two cable drops are provided by the CATV provider. This is done to increase bandwidth. One band is provided by RF A via an RF connector/interface 80. RF A is a bi-directional band signified by the designation "In/Out". A second band is provided by RF B via an RF connector/interface 82. RF B may be either a bi-directional band signified by the designation "In/Out" or may be an incoming band only signified by the designation " In".

An A/B switch 84 is connected to RF A and RF B and is operable to selectively couple either RF A or RF B to the remaining circuitry. An output of the A/B switch 84 is input to a power splitter 86. One port 88 of the splitter 86 is coupled via a line or path 90 to a diplexer 94 associated with a DOCSIS tuner 92. An RDC amplifier 100 is coupled to the diplexer 94. The port 88 supports bi-directional communication. Another port 96 of the splitter 86 may also support bi-directional communication and is coupled via a line or path 98 to an analog/digital video tuner 102.

In the case where RF B is an incoming band or channel only, when the A/B switch 84 is in the "B" position, the RDC is not in communication with the head end 16 and thus the DOCSIS system is disabled. Since this is not preferable, RF B typically supports bi-directional communication (i.e. "In/Out"). In the case where both bands or channels (RF A and RF B) support bi-directional communication, both bands need return channel equipment. This is not cost effective.

Referring to Fig. 6, a block diagram of a system, generally designated 106, of an embodiment in accordance with an aspect of the present invention is shown. In this embodiment, there are two bands provided, RF A and RF B. The RF A band is provided by an RF connector/interface 110. The RF A band supports bi-directional communication and thus includes the designation "In/Out". The RF B band is provided by an RF connector/interface 112. The RF B band supports only one-way communication (from the head end 16) and thus includes the designation " In".

The RF A band is connected to a diplexer 114 via lead or terminal 111. Diplexer 114 is coupled to an RDC amplifier 116 for receiving return data and allowing the transmission thereof to the head end 16. The diplexer 114 is coupled to a power splitter 118 such that the incoming signals from the RF A band may be split. One port 120 of the splitter 118 is coupled via a line or path 122 to a DOCSIS tuner 124. Another port 126 of the splitter 118 is coupled to one input of an A/B switch 130. Another input of the A/B switch 130 is coupled to the RF B connector/interface 112 via lead or terminal 113. An output of the A/B switch 130 is coupled to an analog/digital video tuner 132.

In the embodiment of Fig. 6, it is assumed that the RF B band has analog video only, while the RF A band has analog, digital, and DOCSIS channels. Thus, the DOCSIS tuner and the RDC is coupled to the RF A at all times, regardless of the position of the A/B switch 130 for the video input.

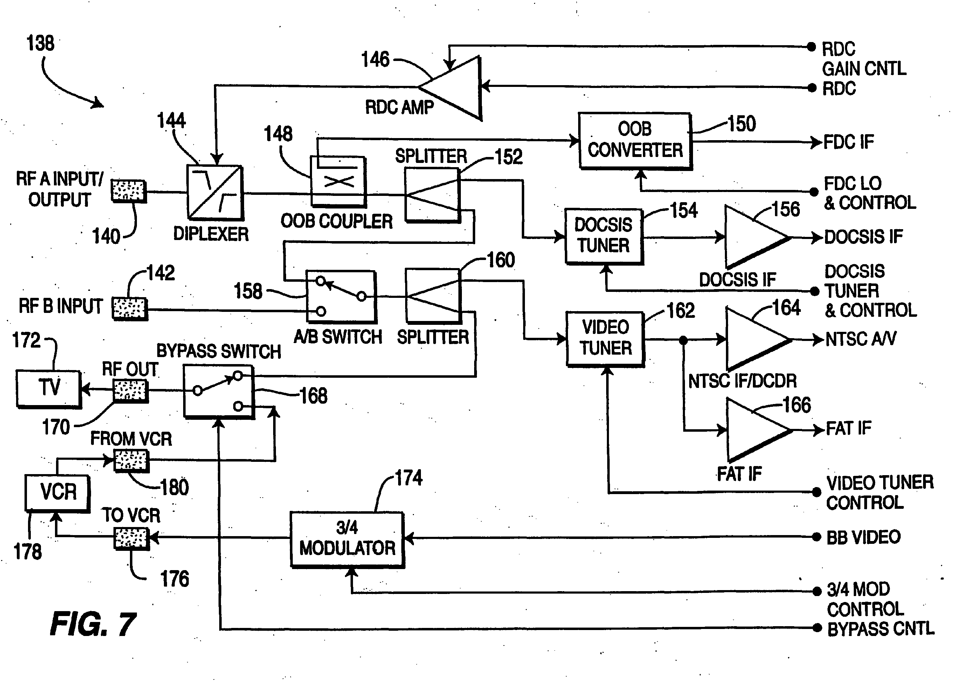

Referring to Fig. 7, a block diagram is depicted of an embodiment of an RF front end of the set top box 30 incorporating the principles of the present invention set forth above. In general, the set top box 30 includes an RF front end, digital and analog demodulators, and digital signal processors. Due to the combination of cable modem and digital video receiver functionality in the same set top box, RF signal processing is complex. The RF front end is thus shown in Fig. 7 and is generally designated 138.

The RF front end 138 of the set top box 30 (the bi-directional communication device) is coupled to two bands or channels, RF A and RF B. It is assumed as in Fig. 6, that the RF A band supports bi-directional communication and thus includes the designation "Input/Output", and has analog, digital, and DOCSIS channels. It is further assumed as in Fig. 6, that the RF B band provides analog video only to the RF front end 138. The RF front end 138 is coupled to the RF A band via an RF connector/interface/port 140. The RF port 140 is coupled to a diplexer 144. The diplexer 144 accepts return data from an RDC amplifier 146. The RDC amplifier 146 accepts RDC data (labeled RDC) and is controlled by an RDC gain control.

The diplexer 144 is coupled to an out of band (OOB) coupler 148 that obtains out of band signaling information for the set top box 30 and inputs the OOB signals into an OOB converter 150. The OOB converter 150 is under control of a forward data channel (FDC) local oscillator (LO) to obtain FDC IF signals. The FDC is frequency division multiplexed. The OOB coupler 148 sends the DOCSIS and video signals to a splitter 152. The DOCSIS signals are input to a DOCSIS tuner 154 that receives DOCSIS control signals via a DOCSIS tuner control line. The DOCSIS tuner 154 inputs the tuned DOCSIS signal to a DOCSIS IF module 156 which outputs DOCSIS IF signals.

The splitter 152 has another output that is coupled to one input (arbitrarily "A") of an A/B switch 158. Another input (arbitrarily "B") of the A/B switch 158 is coupled to an RF connector/interface 142 for the RF B coaxial input. In this manner, the A/B switch 158 may select either the analog video signals on the RF B input or the video signals (analog and/or digital) on the RF A input. The output of the A/B switch 158 is input into a splitter 160. The splitter 160 has one output that is coupled to a bypass (A/B) switch 168. The bypass switch 168 has an output that is coupled to an RF out port 170. A television or television apparatus (a device utilizing television signals) 172 is coupled to the RF out port 170.

The splitter 160 has another output that is coupled to a video tuner 162. The video tuner 162, under control by video tuner signals (labeled Video Tuner Control) tunes the set top box 30 to a video channel. The video tuner 162 has appropriate circuitry/logic to tune the analog or digital video signals. Intermediate frequency (IF) analog signals (typically NTSC signals, but which may be PAL, SECAM, or other standard) from the video tuner 162 are input to an NTSC IF/decoder 164. The NTSC IF/decoder 164 provides NTSC audio/video signals to the other sections of the set top box 30. IF digital signals are input into a FAT (Forward Application Transport) IF module 166 that outputs FAT IF signals.

The bypass switch 168 has another input that accepts signals from a VCR 178 via a VCR port 180. The VCR receives television signals from the RF front end 138 of the set top box 30 via a VCR output port 176 to which the VCR 178 is coupled. The VCR 178 receives television signals from a modulator 174 (here an arbitrary ¾ modulator) that receives baseband (BB) video from the set top box 30. The modulator 174 receives control signals from the set top box 30 via a ¾ modulation control.

The bypass switch 168 is preferably an automatic switch that receives control signals from a bypass control. When the bypass switch 168 is in the up or "A" position as shown in Fig. 7, the television 172 receives television signals directly from either RF A or RF B depending on the position of A/B switch 158. When the bypass switch 168 is in the down or "B" position (not shown), the television 172 receives signals from the set top box via the VCR 178.

While this invention has been described as having a preferred design and/or configuration, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. In a system (36, 106) for decoding video signals received from a first source (78, 110) and supporting continuous bi-directional communication with said first source (78, 110), apparatus providing a signal interface for conditioning signals communicated between said system and said first source, **characterized by**:
a terminal (79, 111) operable to receive a communication signal from said first source (78, 110) and for outputting a return communication signal to said first source;
a diplexer (76, 114) coupled to said terminal (79, 111)and operable to separate a received communication signal from a return communication signal based on different frequency bands of said received communication signal and said return communication signal;
a signal splitting device (66, 118)coupled to said diplexer (76, 114) and operable to split said separated received communication signal to provide first and second signals that substantially replicate said separated received communication signal; and
first and second tuners (60, 124; 68, 132) coupled to receive said first and second replicated signals from said splitting device (66, 118) and operable to tune to receive data being conveyed by said first and second replicated signals respectively.

2. The apparatus of claim 1, further **characterized by**:
a processor (30), coupled to said diplexer (76, 114) and operable to generate said return communication signal; and
wherein said return communication signal is provided to said diplexer (76, 114) via a path bypassing said splitting device (66, 118).

3. The apparatus of claim 1, **characterized in that**:
said first tuner (60, 124) comprises a DOCSIS compatible signal, and tunes to receive said first replicated signal; and
said second tuner (68, 132) comprises at least one of (a) an analog NTCS compatible signal, and (b) an MPEG compatible signal, and tunes to receive said second replicated signal.

4. The apparatus of claim 1, further **characterized by**:
a DOCSIS compatible decoder (60, 124) operable to decode said first replicated signal; and
at least one of (a) an analog NTSC signal compatible decoder (68, 132), and (b) an MPEG compatible decoder (68, 132).

5. The apparatus of claim 1, **characterized in that**:
said system (36, 106) decodes a video signal received from first (78, 110) and second (112) sources and supports continuous bi-directional communication with said first source (78, 110), said system including apparatus providing a signal interface for conditioning signals communicated between said system and said first source (78, 110)and operable to condition a signal received from said second source (112, including:
a switch coupled (130)to said splitting device (118)and said second tuner (132), said switch (130) in a first position providing coupling of said second replicated signal to said second tuner (132), and in a second position providing isolation of said second replicated signal from said second tuner (132) and providing coupling of said video signal received from said second source (112) to said second tuner (132).

6. The apparatus of claim 5, **characterized in that**:
in both said switch first and second positions, said video signal received from said first source (110) remains coupled to said first tuner (124).

7. The apparatus of claim 6, **characterized in that**:
said first tuner (124)comprises a tuner for a DOCSIS compatible cable modem supporting continuous status polling by a CATV head end (16) of a status of said cable modem.

8. In a system (106) for decoding video signals received from first and second sources (110, 112) and supporting continuous bi-directional communication with said first source (110), apparatus providing a signal interface for conditioning signals received from said second source (112) and communicated between said system and said first source (110), **characterized by**:
first and second terminals (111, 113) operable to receive signals from said first and second sources (110, 112) respectively;
a signal splitting device (118) operable to split a signal derived from a signal received by said first terminal (111) to provide first and second signals that substantially replicate said signal derived from said signal received by said first terminal (111);
first and second tuners (124, 132) coupled to receive said first and second replicated signals from said splitting device (118) and operable to tune to receive data being conveyed in said first and second replicated signals respectively; and
a switch (130) coupled to said splitting device (118) and said second tuner (132), said switch (130) in a first position providing coupling of said second replicated signal to said second tuner (132), and in a second position providing isolation of said second replicated signal from said second tuner (132) and providing coupling of said video signal received from said second source (112) to said second tuner (132).

9. The apparatus of claim 8, further **characterized by**:
a diplexer (114) coupled to said first terminal (111) and to said splitting device (118), and operable to separate a received communication signal from a return communication signal to provide said signal derived from said signal received by said first terminal (111), said separation being performed based on different frequency bands of said received communication signal and said return communication signal.

10. The apparatus of claim 8, **characterized in that**:
in both said first and second positions of said switch (130), said video signal received from said source remains coupled to said first tuner (124).

11. The apparatus of claim 8, **characterized in that**:
said first tuner (124) comprises a DOCSIS compatible cable modem supporting continuous status polling by a CATV head end of a status of said cable modem.

12. The apparatus of claim 8, **characterized in that**:
said second tuner (132) comprises an OpenCable compatible tuner.

13. A set top box (30, 106) **characterized by**:
a first terminal (111) operable to receive a first signal from a first source (110) and output a return signal to said first source (110);
a diplexer (114) coupled to said first terminal (111) and operable to separate a received first signal from an outgoing return signal based on a difference of frequency bands of said first signal and said outgoing return signal;
a signal splitter (118) coupled to said diplexer (114) and operable to separate said received first signal into first and second separated signals each of which substantially replicates said received first signal;
a first tuner (124) coupled to receive said first split signal and operable to tune to data conveyed in said first split signal; and
a second tuner (132) coupled to receive said second split signal and operable to tune to data conveyed in said second split signal.

14. The set top box (30, 106) of claim 13, further **characterized by**:
a second terminal (113) operable to receive a second signal from a second source (112); and
a switch (130) coupled to said second terminal (113) and between said splitter (118) and said tuner (132), said switch (130) in a first position providing only said second signal to said second tuner (132), and in a second position providing only said second separated signal to said second tuner (132).

15. The set top box (30, 106) of claim 14, **characterized in that** said second signal is an analog television signal and said second tuner is operable (132) to tune analog television signals.

16. The set top box (30, 106) of claim 15, **characterized in that** said second tuner (132) is operable to tune NTSC analog television signals.

17. The set top box (30, 106) of claim 13, **characterized in that** said first tuner (124) comprises a DOCSIS compatible tuner.

18. A method for signal processing and interface in a set top box **characterized by** the steps of:
receiving a signal;
diplexing said signal into a first signal band and a second signal band;
subsequently splitting said first signal band and said second signal band to create a first and second replicated signal for conveyance to a respective first and second tuner.
